# EUROPEAN PATENT SPECIFICATION

(11) **EP 3 473 508 B1**
(45) Date of publication and mention of the grant of the patent: **15.06.2022**
(21) Application number: 17834700.1
(22) Date of filing: 20.07.2017
(51) Int. Cl.: B60T 8/40, B60T 15/02, F16K 15/04, F16K 27/02, F04B 53/10

(54) **PISTON PUMP FOR VEHICLE BRAKE SYSTEM**
KOLBENPUMPE FÜR EINE FAHRZEUGBREMSANLAGE
POMPE À PISTON DESTINÉE À UN SYSTÈME DE FREINAGE DE VÉHICULE

(30) Priority: 25.07.2016 KR 20160094278
(43) Date of publication of application: 24.04.2019
(73) Proprietor: Erae Ams Co., Ltd, Dalseong-gun, Daegu 42981 (KR)
(72) Inventor: JUNG, Sung-Jae, Dalseong-gun Daegu 42981 (KR); KIM, Jin-Hee, Dalseong-gun Daegu 42981 (KR)
(74) Representative: Manitz Finsterwald Patent- und Rechtsanwaltspartnerschaft mbB
(86) International application number: PCT/KR2017/007809
(87) International publication number: WO 2018/021758

(56) References cited:
- DE-A1-102010 040 329
- JP-A- 2002 502 940
- JP-A- 2016 121 666
- KR-A- 20090 014 306
- KR-A- 20130 133 783
- KR-A- 20130 141 650
- US-A1- 2003 053 920
- US-A1- 2013 287 609
- US-A1- 2015 260 172

## Description

### TECHNICAL FIELD

The present invention relates to a piston pump according to the preamble of claim 1 which supplies hydraulic pressure used for a brake system for a stability control of a vehicle. Such a pump is generally known from US 2013 / 0 287 609 A1.

### BACKGROUND ART

A piston pump which is used for a brake system of a vehicle, in particular a brake system for a vehicle stability control such as an anti-lock brake system (ABS) plays a role of controlling a pressure in a wheel brake cylinder.

A conventional piston pump used for a brake system for a vehicle includes a sleeve housing and a piston which is reciprocally inserted thereinto, and further includes an inlet valve and an outlet valve respectively for introducing and discharging a hydraulic pressure depending on a reciprocal movement of a piston. At this time, the piston is configured to undergo a reciprocal movement in response to a rotational movement of a rotating shaft which is rotated by a driving motor, and for example the piston is configured to undergo a reciprocal movement by an eccentric rotational movement of an eccentric member which rotates together with the rotating shaft. An outlet valve cover is coupled to an end portion of the sleeve housing, and the outlet valve is formed between the outlet valve cover and the sleeve housing.

Such a piston pump needs a discharge passage for a hydraulic pressure which is discharged from the outlet valve, and a Korea Patent Publication No. 10-2009-0014306 discloses a structure that a hydraulic pressure is discharged through a channel extending in a radial direction which is formed in an outlet valve cover. However, since in such a configuration a channel in a type of a groove should be formed in the outlet valve cover, an additional forming process is required to a manufacture of the outlet valve cover, so the manufacturing process is complicated and also the manufacturing cost increases.

Further, although a Korea Patent Publication No. 10-2014-0104104 discloses a structure that a discharge passage in a type of a groove is formed on a valve seat of a sleeve housing in order to solve this problem, an additional forming process also exists since a passage is additionally formed on the valve seat.

Further, although a method that an orifice plate having a hydraulic oil passage is interposed between a sleeve housing and an outlet valve cover has been introduced, the number of parts increases and the structure becomes complicated since an orifice plate should be additionally provided to the outlet valve.

### - Prior art document -

1. US Patent No. US 6 334 762 B1 (Date of patent: 2002.01.01.)
2. KR Patent Publication No. KR 10-2009-0014306 (Date of publication: 2009.02.09.)
3. KR Patent Publication No. KR 10-2014-0104104 (Date of publication: 2014.08.28.)
4. KR 10-2013-0133783 A

### DETAILED DESCRIPTION OF THE INVENTION

### TECHNICAL PROBLEM

The present invention has been made in an effort to provide an outlet valve of a piston pump for a regulation of a hydraulic pressure of a brake system of a vehicle which has a simple structure and can be easily manufactured.

### TECHNICAL SOLUTION

A piston pump according to the present invention comprises the features of claim 1.

The plurality of the legs may be equidistantly disposed along a circumferential direction.

The sleeve housing and the outlet valve cover may be disposed such that a gap exists therebetween.

The respective leg may include: a radially elongated portion which is disposed in a gap formed in a longitudinal direction of the sleeve housing among the gap between the sleeve housing and the outlet valve cover; and a longitudinally elongated portion which is disposed in a gap formed in a radial direction of the sleeve housing among the gap between the sleeve housing and the outlet valve cover.

The body may include: an edge portion having a ring shape; and an elastic force providing portion which connects two different points of an inner circumferential surface of the edge portion.

### ADVANTAGEOUS EFFECTS

According to the present invention, since the ball biasing member of the outlet valve of the piston pump has a function of forming an oil discharge passage as well as a function of elastically supporting the ball, the piston pump has a reduced number of parts and can be easily manufactured.

### BRIEF DESCRIPTION OF THE DRAWINGS

FIG. 1 is a side elevational view of a piston pump according to an embodiment of the present invention.
FIG. 2 is a sectional view taken along a line II-II in FIG. 1.
FIG. 3 is a perspective sectional view taken along a line II-II in FIG. 1.
FIG. 4 is a perspective view of a ball biasing member of an outlet valve according to an embodiment of the present invention.
FIG. 5 shows a state that a ball biasing member of an outlet valve according to an embodiment of the present invention is coupled to a cover.
FIG. 6 shows an open state of the outlet valve according to an embodiment of the present invention.

### DETAILED DESCRIPTION OF THE EMBODIMENTS

Embodiments of the present invention will be described in detail with reference to the accompanying drawings hereinafter.

A piston pump according to an embodiment of the present invention may be used as a part of a device for regulating a hydraulic pressure for an operation of a brake system of a vehicle, and may play a role of receiving a hydraulic oil discharged from a master cylinder of a vehicle and transmitting the received hydraulic oil to a wheel cylinder. The device for regulating the hydraulic oil pressure may include a plurality of solenoid valves, an accumulator, a motor or the like as well as a piston pump according to an embodiment of the present invention, and the piston pump, the solenoid valve, the accumulator, the motor or the like may be disposed within a modulator block.

A piston pump according to an embodiment of the present invention may be disposed within a bore which is formed in a modulator block. At this time, an inlet port and an outlet port which are passages through which an oil is introduced into the bore and is discharged from the bore, and it may be configured that the oil introduced through the inlet port is discharged through the outlet port after having passed the piston pump according to an embodiment of the present invention.

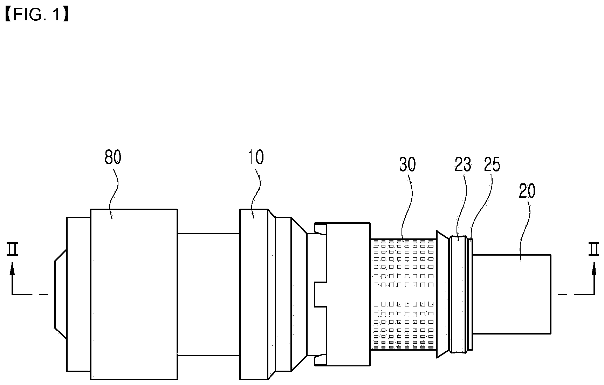

Referring to FIG. 1 to FIG. 3, a sleeve housing 10 and a piston 20 are provided.

The sleeve housing 10 includes a bore 11. At this time, one side of the sleeve housing 10 is open and an outlet hole 12 is provided at the other side thereof.

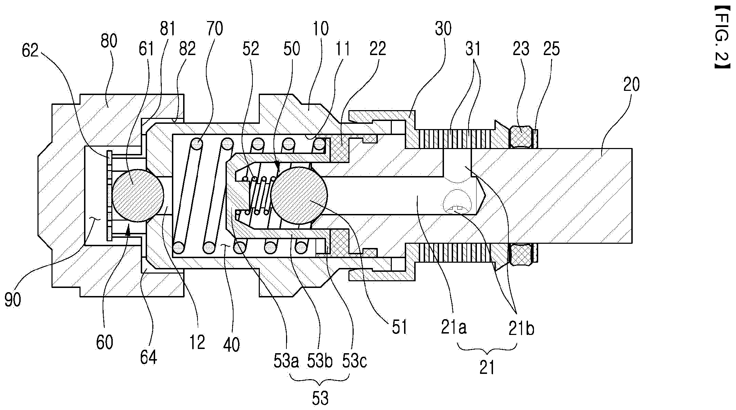

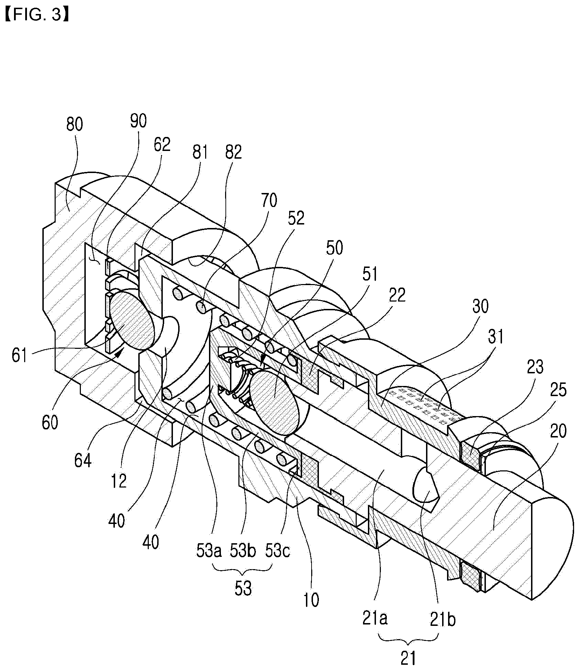

The piston 20 is inserted into the bore 11 of the sleeve housing 10 so as to be able to reciprocally move. In detail, the piston 20 is disposed to be reciprocally movable in a state that a distal end portion of the piston 20 is inserted into the bore 11. As shown in FIG. 2 and FIG. 3, a side of the sleeve housing 10 which is located opposite to a side where an outlet hole 12 is formed is open, and the distal end portion of the piston 20 is inserted into the bore 11 via an open space of the sleeve housing 10. At this time, not shown in the drawing, an end of the piston 20 which is opposite to an end which is inserted into the bore 11 of the sleeve housing 10 may contact an eccentric spindle which is driven by a motor (not shown), and thus a reciprocal movement of the piston 20 is resulted from the rotation of the eccentric spindle. A coil spring 70 which elastically supports the piston 20 with respect to the sleeve housing 10 is provided. The piston 20 is pushed by an eccentric spindle from a position shown in FIG. 2 and FIG. 3 toward the outlet hole 12, and is returned to the position shown in FIG. 2 and FIG. 3 by the coil spring 70. That is, the piston 20 undergoes a reciprocal movement by the rotation of the eccentric spindle and the coil spring 70.

At this time, as shown in FIG. 2 and FIG. 3, a sealing member 22 for sealing between the piston 20 and the sleeve housing 10 may be provided, and a sealing member 23 for sealing between the piston 20 and a portion where the eccentric spindle is disposed may be provided. As shown in the drawing, the sealing member indicated by reference numeral 22 may be elastically supported by the piston 20 by the coil spring 70 together with a retainer 53 of an inlet valve 50 which is described later. Meanwhile, the sealing member indicated by the reference numeral 23 may be supported by a separate supporting member 25. The sealing members 22 and 23 and the supporting member 25 may have a shape of a ring.

An inlet passage 21 for introducing an oil is provided in the piston 20. As shown in the drawing, the inlet passage 21 may be comprised of a radial passage 21b which is elongated in a radially inward direction from an outer surface of the piston 20 and a longitudinal passage which is elongated in a longitudinal direction of the piston 20, and the radial passage 21b may be provided in a plural. An oil filter 30 may be provided at an area where the radial passage 21b is formed. The oil filter 30 may have a plurality of through holes 31, and an oil in an inlet port (not shown) formed in the modulator block (not shown) may be introduced into the radial passage 21b after having passed the oil filter 30.

A space between the sleeve hosing 10 and the piston 20 acts as a compression chamber 40. That is, a space between the sleeve housing 10 and the piston 20 is the compression chamber 40 in which an oil is compressed, and the oil is introduced into the compression chamber 40 via the inlet passage 21 and is discharged from the compression chamber 40 via the outlet hole 12.

An inlet valve 50 for regulating an introduction of an oil into the compression chamber 40 and an outlet valve 60 for regulating a discharge of an oil from the compression chamber 40 are respectively provided. The inlet valve 50 selectively opens/closes the inlet passage 21 so as to regulate the introduction of the oil, and the outlet valve 60 selectively opens/closes the outlet hole 12 so as to regulate the discharge of the oil.

The inlet valve 50 may be formed by a ball-poppet valve. For example, as shown in FIG. 2 and FIG. 3, the inlet valve may include a ball 51 which opens or closes the inlet passage 21, a coil spring 52 elastically supporting the ball 51, and a retainer 53 supporting the coil spring 52. The retainer 53 may include a body portion 53a which supports the coil spring 52 and a plurality of leg portions 53b which are respectively elongated from an outer end of the body portion 53a. At this time, a supporting portion 53c which is elongated in a radially outward direction at an outer end of the leg portions 53b may be provided, and the supporting portion 53c is disposed to contact the piston 20 and the coil spring 70 supports the supporting portion 53c, and thereby the retainer 53 is elastically supported together with the piston 20 by the coil spring 70.

When the ball 51 of the inlet valve 50 is positioned at a position shown in FIG. 2 and FIG. 3, the inlet passage 21 is closed. Meanwhile, if the piston 20 moves toward the discharge hole 12 from the state of FIG. 2 and FIG. 3, the coil spring 70 is compressed and the inlet valve 50 also moves toward the discharge hole 12, and if the eccentric spindle further rotates from this state so that a force pushing the piston 20 is removed, the piston 20 returns to the position shown in FIG. 2 and FIG. 3 by a restoring force of the coil spring 70, and during this process the return of the ball 51 becomes later than the return of the piston 20 so that the ball 51 and the piston 20 is temporarily separated from one another so as to open the inlet passage 21. While the piston 20 moves toward the discharge hole 12, the oil in the compression chamber 40 is compressed to be discharged via the discharge hole 12, and the oil is introduced into the compression chamber 40 via the inlet passage 21 while the ball 51 is maintained to be separated from the piston 20.

Meanwhile, the outlet valve 60 selectively opens/closes the discharge hole 12 to regulate an oil discharge via the discharge hole 12.

A cover 80 for securing a space for the outlet valve 60 is connected to the sleeve housing 10. The cover 80 is, as shown in FIG. 2 and FIG. 3, connected to the sleeve housing 10 to surround a portion where the discharge hole 12 is formed. Thereby, a space is formed between the sleeve housing 10 and the cover 80, and the outlet valve 60 is disposed between the sleeve housing 10 and the cover 80.

At this time, a discharge chamber 90 in which the discharged oil is stored is formed between the sleeve housing 10 and the cover 80. The oil discharged through the discharge hole 12 is discharged through an outlet port which is formed in a modulator block (not shown) via the discharge chamber 90.

The outlet valve 60 may be formed by a ball-poppet valve. For example, the outlet valve 60 includes a ball 61 and a ball biasing member 62.

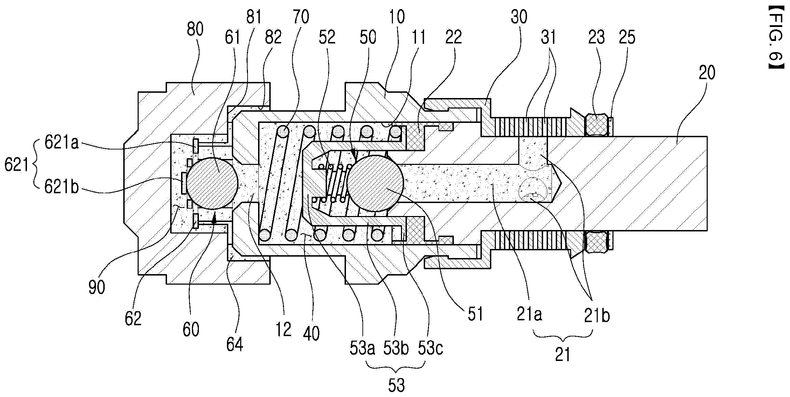

The ball 61 is disposed between the sleeve housing 10 and the cover 80 to be reciprocally movable so as to selectively open/close the discharge hole 12. The discharge hole 12 is closed if the ball 61 closely contact the sleeve housing 10 as shown in FIG. 2 and FIG. 3, and the discharge hole 12 is opened if the ball 61 is separated from the sleeve housing 10 as shown in FIG. 6.

The ball biasing member 62 exerts a force to urge the ball 61 to move to a position of closing the discharge hole 12. Meanwhile, the ball biasing member 62 is configured such that an oil discharge passage 64 for discharging the oil discharged from the discharge hole 12 to the outside is formed between the sleeve housing 10 and the cover 80. That is, the ball biasing member 62 has a function of forming the oil discharge passage 64 as well as a function of providing an elastic force to urge the ball 61 to move to the position of closing the discharge hole 12. In a conventional piston pump an outlet valve of a piston pump has a coil spring for biasing a ball and a separate member for forming an oil discharge passage is provided or a groove for forming an oil discharge passage is formed in the sleeve housing, however in the present invention these two functions are realized by the ball biasing member 62. Accordingly, the outlet valve 60 according to an embodiment of the present invention has a reduced number of parts, a simple structure and an enhanced productability.

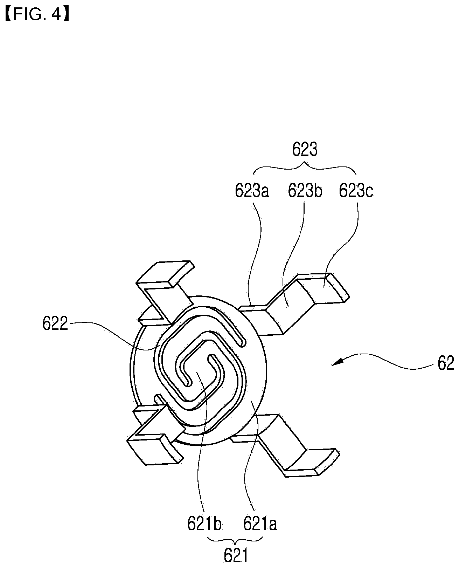

As shown in FIG. 2 to FIG. 4, the ball biasing member 62 includes a body 621 which elastically supports the ball 61 and a plurality of legs 623 which are respectively connected to the body 621. Referring to FIG. 4, the body 621 may be formed to have generally a shape of a circular plate, and the legs 623 may be connected to an edge of the body 621 and may be equidistantly disposed along a circumferential direction. The leg 623 may, as shown in FIG. 4, include a first longitudinally elongated portion 623a, a radially elongated portion 623b and a second longitudinally elongated portion 623c. At this time, the longitudinal direction means a direction parallel with the longitudinal direction of the piston 20 and the sleeve housing 10. Although four legs 623 are shown in the drawing, the number of the legs 623 is not limited thereto.

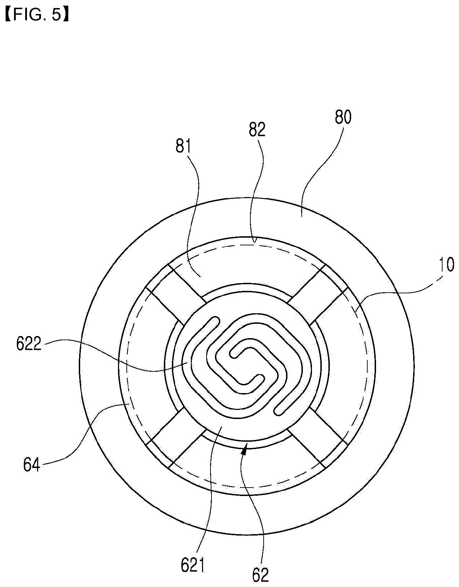

As shown in FIG. 2 and FIG. 3, the sleeve housing 10 and the cover 80 are disposed such that a gap is formed therebetween, and the legs 623 are disposed to be inserted into the gap between the sleeve housing 10 and the cover 80. That is, as shown in FIG. 2, FIG. 3 and FIG. 5, a gap between inner surfaces 81 and 82 of the cover 80 and an outer surface of the sleeve housing 10 exists, the radially elongated portion 623b and the second longitudinally elongated portion 623c are inserted into the gap between the sleeve housing 10 and the cover 80. In detail, the radially elongated portion 623b is disposed in a gap formed along a longitudinal direction of the sleeve housing 10 among the total gap between the sleeve hosing 10 and the cover 80, and the second longitudinally elongated portion 623c is disposed in a gap formed along a radial direction of the sleeve housing 10 among the total gap between the sleeve housing 10 and the cover 80. The first longitudinally elongated portion 623a is elongated along a longitudinal direction at an outer end of the body 621 and connects the body 621 and the radially elongated portion 623b together. Due to such a structure of the legs 623 of the ball biasing member 62, an oil discharge passage 64 is formed between the sleeve housing 10 and the cover 80.

If a pressure of an oil within the compression chamber 40 acts on the ball 61 during a compression process in a state that the radially elongated portion 623b and the second longitudinally elongated portion 623c are fitted between the sleeve housing 10 and the cover 80 so as to be fixed, the body 621 moves back by the pressure acting on the ball 61 so as to be elastically deformed. Accordingly, as shown in FIG. 6, if the piston 20 moves toward the discharge hole 12 by the eccentric spindle, the pressure in the compression chamber 40 increases, and the ball 61 moves due to an increased pressure to a position where the discharge hole 12 is opened. During this process, an oil which has been moved to the discharge chamber 90 via the discharge hole 12 is discharged to an outlet port (not shown) via the oil discharge passage 64. If the eccentric spindle further rotates from the state shown in FIG. 6, the ball 61 returns to the position shown in FIG. 2, and the compression and the discharge of the oil are repeated by the rotation of the eccentric spindle.

The body 621 may be formed to effectively support the ball 61 by an elastic deformation. For example, the body 621 may include an edge portion 621a and an elastic force providing portion 621b. The edge portion 621a may have a ring shape, and the elastic force providing portion 621b may be formed to connect two different points of an inner circumferential surface of the edge portion 621a. At this time, the elastic force providing portion 621b may be formed to have a curved shape so as to have a good elasticity. The body 621 may be formed of material having elastic deformation and restoration, and for example may be formed of metal having an elastic restoring force.

### INDUSTRIAL APPLICABILITY

The present invention can be applied to a piston pump of a vehicle, so it has an industrial applicability.

## Claims

1. A piston pump comprising:
a sleeve housing (10) which forms a bore (11) and is provided with a discharge hole (12);
a piston (20) which is inserted into the bore (11) to be reciprocally movable;
an inlet valve (50);
a cover (80) which is connected to the sleeve housing (10) to surround a portion where the discharge hole (12) is formed; and
an outlet valve (60) which is configured to open/close the discharge hole (12),
wherein the outlet valve (60) comprises:
a ball (61) which is movably disposed between the sleeve housing (10) and the cover (80) to open/close selectively the discharge hole (12); and
a ball biasing member (62) which exerts a force to urge the ball (61) to move to a position where the discharge hole (12) is closed,
wherein the ball biasing member (62) comprises a body (621) which elastically supports the ball (61),
wherein the ball biasing member (62) is formed such that an oil discharge passage (64) for discharging an oil discharged via the discharge hole (12) to an outside is formed between the sleeve housing (10) and the cover (80),
**characterized in that**
the piston (20) has an inlet passage (21) through which oil is introduced into the bore (11);
the inlet valve (50) is configured to open/close the inlet passage (21) of the piston (20); and
wherein the ball biasing member (62) further comprises a plurality of legs (623) which are respectively connected to the body (621) and extend from the body (621) toward the sleeve housing (10), wherein the legs (623) are inserted into a gap between the sleeve housing (10) and the cover (80).

2. The piston pump of claim 1, wherein the plurality of the legs (623) are equidistantly disposed along a circumferential direction of the body (621).

3. The piston pump of claim 1, wherein the sleeve housing (10) and the outlet valve cover (80) are disposed such that the gap forming the oil discharge passage (64) exists therebetween.

4. The piston pump of claim 3, wherein each respective leg (623) comprises:
a radially elongated portion (623c) which is disposed in a gap formed in a longitudinal direction of the sleeve housing (10) among the gap between the sleeve housing (10) and the cover (80); and
a longitudinally elongated portion (623b) which is disposed in a gap formed in a radial direction of the sleeve housing (10) among the gap between the sleeve housing (10) and the cover (80).

5. The piston pump of claim 1, wherein the body (621) comprises:
an edge portion having a ring shape; and
an elastic force providing portion which connects two different points of an inner circumferential surface of the edge portion.

## Patentansprüche

1. Kolbenpumpe, umfassend:
ein Hülsengehäuse (10), das eine Bohrung (11) bildet und mit einer Austragsöffnung (12) versehen ist;
einen Kolben (20), der in die Bohrung (11) eingesetzt ist, um hin- und herbewegt zu werden;
ein Einlassventil (50);
eine Abdeckung (80), die mit dem Hülsengehäuse (10) verbunden ist, um einen Abschnitt zu umgeben, in dem die Austragsöffnung (12) ausgebildet ist; und
ein Auslassventil (60), das so konfiguriert ist, dass es die Austragsöffnung (12) öffnet/schließt,
wobei das Auslassventil (60) umfasst:
eine Kugel (61), die beweglich zwischen dem Hülsengehäuse (10) und der Abdeckung (80) angeordnet ist, um die Austragsöffnung (12) selektiv zu öffnen/zu schließen; und
ein Kugelvorspannelement (62), das eine Kraft ausübt, um die Kugel (61) zur Bewegung in eine Position zu drängen, in der die Austragsöffnung (12) geschlossen ist,
wobei das Kugelvorspannelement (62) einen Körper (621) umfasst, der die Kugel (61) elastisch abstützt,
wobei das Kugelvorspannelement (62) so ausgebildet ist, dass zwischen dem Hülsengehäuse (10) und der Abdeckung (80) ein Ölaustragskanal (64) zum Austragen eines über die Austragsöffnung (12) ausgetragenen Öls nach außen ausgebildet ist,
**dadurch gekennzeichnet, dass**
der Kolben (20) einen Einlasskanal (21) aufweist, durch den Öl in die Bohrung (11) eingeleitet wird;
das Einlassventil (50) so konfiguriert ist, dass es den Einlasskanal (21) des Kolbens (20) öffnet/schließt; und
wobei das Kugelvorspannelement (62) ferner eine Mehrzahl von Schenkeln (623) aufweist, die jeweils mit dem Körper (621) verbunden sind und sich von dem Körper (621) in Richtung des Hülsengehäuses (10) erstrecken,
wobei die Schenkel (623) in einen Spalt zwischen dem Hülsengehäuse (10) und der Abdeckung (80) eingesetzt sind.

2. Kolbenpumpe nach Anspruch 1, wobei die Mehrzahl der Schenkel (623) entlang einer Umfangsrichtung des Körpers (621) unter gleichem Abstand angeordnet sind.

3. Kolbenpumpe nach Anspruch 1, wobei das Hülsengehäuse (10) und die Abdeckung (80) des Auslassventils so angeordnet sind, dass zwischen ihnen der den Ölaustragskanal (64) bildende Spalt besteht.

4. Kolbenpumpe nach Anspruch 3, wobei jeder entsprechende Schenkel (623) umfasst:
einen radial verlängerten Abschnitt (623c), der in einem Spalt angeordnet ist, der in einer Längsrichtung des Hülsengehäuses (10) über den Spalt zwischen dem Hülsengehäuse (10) und der Abdeckung (80) gebildet ist; und
einen länglichen Abschnitt (623b), der in einem in radialer Richtung des Hülsengehäuses (10) über den Spalt zwischen dem Hülsengehäuse (10) und der Abdeckung (80) gebildeten Spalt angeordnet ist.

5. Kolbenpumpe nach Anspruch 1, wobei der Körper (621) umfasst:
einen Randabschnitt, der eine Ringform aufweist; und
einen elastischen, eine Kraft erzeugenden Abschnitt, der zwei verschiedene Punkte einer inneren Umfangsfläche des Randabschnitts miteinander verbindet.

## Revendications

1. Pompe à piston comprenant :
un logement de manchon (10) qui forme un perçage (11) et qui est doté d'un trou de décharge (12) ;
un piston (20) qui est inséré dans le perçage (11) pour être déplacé en va-et-vient ;
une vanne d'entrée (50) ;
une couverture (80) qui est connectée au logement de manchon (10) pour entourer une portion dans laquelle le trou de décharge (12) est formé ; et
une vanne de sortie (60) qui est configurée pour ouvrir/fermer le trou de décharge (12),
dans laquelle la vanne de sortie (60) comprend :
une bille (61) qui est disposée de manière déplaçable entre le logement de manchon (10) et la couverture (80) pour ouvrir/fermer de manière sélective le trou de décharge (12) ; et
un élément de sollicitation de bille (62) qui exerce une force pour amener la bille (61) à se déplacer jusqu'à une position dans laquelle le trou de décharge (12) est fermé,
dans laquelle l'élément de sollicitation de bille (62) comprend un corps (621) qui supporte élastiquement la bille (61),
dans laquelle l'élément de sollicitation de bille (62) est formé de telle sorte qu'un passage de décharge d'huile (64), destiné à décharger de l'huile déchargée via le trou de décharge (12) jusqu'à un extérieur, est formé entre le logement de manchon (10) et la couverture (80),
**caractérisée en ce que**
le piston (20) a un passage d'entrée (21) à travers lequel l'huile est introduite jusque dans le perçage (11) ;
la vanne d'entrée (50) est configurée pour ouvrir/fermer le passage d'entrée (21) du piston (20) ; et
dans laquelle l'élément de sollicitation de bille (62) comprend en outre une pluralité de pattes (623) qui sont respectivement connectées au corps (621) et qui s'étendent depuis le corps (621) vers le logement de manchon (10), dans laquelle les pattes (623) sont insérées jusque dans un intervalle entre le logement de manchon (10) et la couverture (80).

2. Pompe à piston selon la revendication 1, dans laquelle la pluralité des pattes (623) sont disposées de manière équidistante le long d'une direction circonférentielle du corps (621).

3. Pompe à piston selon la revendication 1, dans laquelle le logement de manchon (10) et la couverture de vanne de sortie (80) sont disposés de telle sorte que l'intervalle formant le passage de décharge d'huile (64) existe entre ceux-ci.

4. Pompe à piston selon la revendication 3, dans laquelle chaque patte respective (623) comprend :
une portion allongée radialement (623c) qui est disposée dans un intervalle formé dans une direction longitudinale du logement de manchon (10) au sein de l'intervalle entre le logement de manchon (10) et la couverture (80) ; et
une portion allongée longitudinalement (623b) qui est disposée dans un intervalle formé dans une direction radiale du logement de manchon (10) au sein de l'intervalle entre le logement de manchon (10) et la couverture (80).

5. Pompe à piston selon la revendication 1, dans laquelle le corps (621) comprend :
une portion de bord ayant une forme annulaire ; et
une portion de fourniture de force élastique qui connecte deux points différents d'une surface circonférentielle intérieure de la portion de bord.
